Europäisches Patentamt

European Patent Office

Office européen des brevets

(19)

(11) Veröffentlichungsnummer : **0 218 817 B1**

# EUROPÄISCHE PATENTSCHRIFT

(12)

(45) Veröffentlichungstag der Patentschrift :
23.01.91 Patentblatt 91/04

(51) Int. Cl.⁵ : **H01C 10/10, G01L 1/22,
G01B 7/20**

(21) Anmeldenummer : **86110171.5**

(22) Anmeldetag : **24.07.86**

(54) **Dehnungsmessstreifen.**

(30) Priorität : **11.09.85 DE 3532328**

(43) Veröffentlichungstag der Anmeldung :
**22.04.87 Patentblatt 87/17**

(45) Bekanntmachung des Hinweises auf die
Patenterteilung :
**23.01.91 Patentblatt 91/04**

(84) Benannte Vertragsstaaten :
**DE FR GB IT**

(56) Entgegenhaltungen :
GB-A- 1 047 412
US-A- 3 018 198
US-A- 3 833 410
MICROELECTRONICS AND RELIABILITY,
Band 3, Nr. 4, Dezember 1964, Seiten 227-232,
Pergamon Press, London, GB; D.F.A.
MACLACHLAN: "Evaporated film strain
gauges for high-temperature applications"

(73) Patentinhaber : **Degussa Aktiengesellschaft
Weissfrauenstrasse 9
D-6000 Frankfurt am Main 1 (DE)**

(72) Erfinder : **Diehl, Walter, Dr.
Gustav-Adolf-Strasse 29
D-6450 Hanau 1 (DE)**
Erfinder : **Eiermann, Kurt, Dr.
Friedhofstrasse 26
D-6102 Pfungstadt (DE)**
Erfinder : **Gwinner, Dieter, Dr.
Vosswaldestrasse 7
D-6450 Hanau 9 (DE)**
Erfinder : **Jacques, Harald, Dr.
Lindenstrasse 12
D-6452 Hainburg (DE)**
Erfinder : **Schilling, Werner, Prof. Dr.
Hauwourdlnstrasse 12
D-5170 Jülich (DE)**

EP 0 218 817 B1

**Beschreibung**

Die Erfindung betrifft Dehnungsmeßstreifen zur Messung einer mechanischen Verformung durch Veränderung des elektrischen Widerstands einer metallischen Widerstandsschicht auf einem der Verformung unterworfenen elektrisch isolierenden Träger.

Dehnungsmeßstreifen bestehen aus einem elektrisch isolierenden Träger, auf den die Leiterbahnen eines elektrischen Widerstands aufgebracht sind. Eine elastische Verformung des Trägers bewirkt eine reversible Änderung des elektrischen Widerstands der Metallschicht, falls die Streckgrenze dieser Schicht nicht überschritten wird.

Dehnungsmeßstreifen finden verbreitet Anwendung in elektrischen Dehnungs-, Druck- und Kraftaufnehmern. Sollen die Dehnungsmeßstreifen in chemisch agressiver Umgebung eingesetzt werden, müssen sie korrosionsbeständig sein. Liegen zusätzlich hohe Umgebungstemperaturen oder hohe Temperaturen des Meßobjekts bzw. des Meßmediums vor, ist die Oxidations-beständigkeit der Widerstandsschicht eine wichtige Voraussetzung für deren Einsatzmöglichkeit.

Für diese Anwendungsfälle scheiden daher Halbleiterdehnungsmeßstreifen aus, ebenso wie die üblichen metallischen Dehnungsmeßstreifen auf Kupfer-, Nickel- oder Eisenbasis (C. Rohrbach: "Handbuch für elektrisches Messen mechanischer Größen", VDI-Verlag, Düsseldorf, 1967, S. 130), da diese korrosions- bzw. oxidationsanfällig sind.

Meßwiderstände, deren mechanische und elektrische Eigenschaften bei hohen Temperaturen und in chemisch agressiver Umgebung langzeitstabil sein sollen, werden zweckmäßigerweise aus den Edelmetallen der Platingruppe hergestellt. So wird z.B. Platin wegen seiner Langzeitstabilität als Material für Temperaturmeßwiderstände in Industrieanlagen bevorzugt.

Der Temperaturkoeffizient des elektrischen Widerstands der unlegierten Platinmetalle ist jedoch so groß ($\sim 10^{-3}$ K$^{-1}$), daß temperaturbedingte Fehler die Dehnungsmessung stark beeinträchtigen würden. Außerdem ist die mechanische Härte der reinen Platinmetalle zu gering für hohe Dehnungsbeträge.

Erfahrungsgemäß kann der Temperaturkoeffizient des elektrischen Widerstands durch Zulegieren eines oder mehrerer Metalle herabgesetzt und die Härte gleichzeitig erhöht werden. Dieses Verhalten wurde an Drähten aus Platin-Rhodium, Platin-Palladium, Platin-Rhodium-Palladium, Platin-Palladium-Iridium und Platin-Palladium-Molybdän (Pt-Pd-Mo) beobachtet (GB-PS 1 061 233, GB-PS 1 047 412, GB-PS 1 077 528), die in dieser Form für Dehnungsmeßstreifen eingesetzt werden.

Bis auf Platin-Rhodium enthalten diese Legierungen alle Palladium, das für seine hohe Aufnahmefähigkeit von Wasserstoff bekannt ist. Verursacht durch die katalytische Wirkung der Platinmetalle kann aus reduzierenden Gasen Wasserstoff abgespalten und im Dehnungsmeßwiderstand gelöst werden. Dadurch verändern sich sowohl Härte als auch elektrische Leitfähigkeit. Palladium wirkt sich also nachteilig auf die Langzeitstabilität dieser Dehnungsmeßstreifen aus.

Es war Aufgabe der vorliegenden Erfindung, Dehnungsmessstreifen zur Messung einer mechanischen Verformung durch Veränderung des elektrischen Widerstands einer metallischen Widerstandsschicht auf einem der Verformung unterworfenen elektrisch isolierenden Träger zu entwickeln, deren Widerstandsschicht kein Palladium enthält, einen möglichst niedrigen Temperaturkoeffizienten des elektrischen Widerstands aufweist und eine hohe Langzeitstabilität auch in korrodierenden Medien bei hohen Temperaturen besitzt.

Diese Aufgabe wurde erfindungsgemäß dadurch gelöst, daß die Widerstandsschicht aus einer binären Platinlegierung mit 35 bis 60 Atom% Iridium oder 25 bis 45 Atom% Ruthenium, Rest Platin besteht.

Vorzugsweise besteht der Träger aus Aluminiumoxid und die Widerstandsschicht aus einer binären Platinlegierung mit 45 bis 55 Atom% Iridium oder 28 bis 38 Atom% Ruthenium, Rest Platin.

Überraschenderweise erhält man bereits mit binären Platinlegierungen, die 35 bis 60 Atom% Iridium oder 25 bis 45 Atom% Ruthenium enthalten, langzeitstabile Dehnungsmessstreifen mit sehr kleinen Temperaturkoeffizienten des elektrischen Widerstands. Es ist daher nicht notwendig, definierte, aufwendig herzustellende Vielstofflegierungen einzusetzen.

Die Widerstandsschichten lassen sich beispielsweise durch Kathodenzerstäuben oder Aufdampfen im Vakuum herstellen, wobei normalerweise Schichtdicken von etwa 1 µm zur Anwendung kommen. Als Träger können neben Aluminiumoxid auch andere keramische und nichtkeramische Werkstoffe verwendet werden.

Eine Hochtemperaturglühung der Widerstandsschichten, z.B. bei 1000°C in inerter Atmosphäre, ist zur Stabilisierung der Materialeigenschaften von Vorteil.

Bei den erfindungsgemäßen binären Platinlegierungen sind über einen großen Konzentrationsbereich die Temperaturkoeffizienten des elektrischen Widerstands nur schwach von der Legierungszusammensetzung abhängig. Für Platin-Iridium-Legierungen mit 35 bis 60 Atom% Iridium und für Platin-Ruthenium-Legierungen mit 25 bis 45 Atom% Ruthenium durchlaufen diese Temperaturkoeffizienten jeweils ein flaches Minimum: Die größten Unterschiede betragen nur etwa 10%. Die Minima liegen bei den Konzentrationen Pt$_{53}$Ir$_{47}$ (5,8·10$^{-4}$ K$^{-1}$) und Pt$_{68}$Ru$_{32}$ (3,0·10$^{-4}$ K$^{-1}$). Bei der Herstellung der Schichten sind also Abweichungen von diesen optimalen Konzentrationen um einige Atomprozent unkritisch. Dieser Vorzug ist bei den Vakuumbeschichtungsverfahren von Bedeutung.

Im Vergleich zu reinen Platinschichten auf Aluminiumoxid (DE-AS 25 28 752) beträgt die Erniedrigung des Temperaturkoeffizienten des elektrischen Widerstands bei beiden Legierungen etwa eine Größenordnung. Auch die spezifischen elektrischen Widerstände variieren nur gerinfügig innerhalb dieser Konzentrationsintervalle. Die Änderung von 35 auf 60 Atom% Iridium in Platin-Iridium führt zu einer Erhöhung des elektrischen Widerstands von nur 23 auf 26 $\mu\Omega$cm. Nimmt der Ruthenium-Anteil in Platin-Ruthenium von 25 auf 45 Atom% zu, ändert sich der spezifische elektrische Widerstand von 38 auf 46 $\mu\Omega$cm.

Mit einer $Pt_{53}Ir_{47}$-Schicht auf Aluminiumoxid läßt sich eine Dehnungsempfindlichkeit des Widerstands von K = 5 erzielen.

## Ansprüche

1. Dehnungsmeßstreifen zur Messung einer mechanischen Verformung durch Veränderung des elektrischen Widerstands einer metallischen Widerstandsschicht auf einem der Verformung unterworfenen elektrisch isolierenden Träger, dadurch gekennzeichnet, daß die Widerstandsschicht aus einer binären Platinlegierung mit 35 bis 60 Atom% Iridium oder 25 bis 45 Atom% Ruthenium, Rest Platin besteht.

2. Dehnungsmeßstreifen nach Anspruch 1, dadurch gekennzeichnet, daß der Träger aus Aluminiumoxid und die Widerstandsschicht aus einer binären Platinlegierung mit 45 bis 55 Atom% Iridium oder 28 bis 38 Atom% Ruthenium, Rest Platin besteht.

## Claims

1. A strain gauge for measuring a mechanical deformation through a change in the electrical resistance of a metallic resistance layer on an electrically insulating support subjected to the deformation, characterized in that the resistance layer consists of a binary platinum alloy containing 35 to 60 atom-% iridium or 25 to 45 atom-% ruthenium, remainder platinum.

2. A strain gauge as claimed in claim 1, characterized in that the support consists of aluminium oxide and the resistance layer consists of a binary platinum alloy containing 45 to 55 atom-% or 28 to 38 atom-% ruthenium, remainder platinum.

## Revendications

1. Jauge extensométrique pour mesurer une déformation mécanique par variation de la résistance électrique d'une couche résistante métallique appliquée sur un support isolant de l'électricité et soumis à la déformation, caractérisée en ce que la couche résistante se compose d'un alliage binaire de platine qui contient un pourcentage d'atomes d'irridium allant de 35 à 60%, ou un pourcentage d'atomes de ruthénium allant de 25 à 45%, le reste étant du platine.

2. Jauge extensométrique selon la revendication 1, caractérisée en ce que le support se compose d'oxyde d'aluminium et la couche résistante d'un alliage binaire de platine qui contient un pourcentage d'atomes d'irridium allant de 45 à 55%, ou un pourcentage d'atomes de ruthénium allant de 28 à 38%, le reste étant du platine.